# EUROPEAN PATENT APPLICATION

(11) **EP 4 549 185 A1**
(43) Date of publication of application: **07.05.2025**
(21) Application number: 23830243.4
(22) Date of filing: 27.06.2023
(51) Int. Cl.: B60H 1/32, F28F 3/12, B60H 1/00

(54) **COOLANT DISTRIBUTION ASSEMBLY, THERMAL MANAGEMENT MODULE AND VEHICLE THERMAL MANAGEMENT SYSTEM**

(30) Priority: 28.06.2022 CN 202210753305
(71) Applicant: Valeo Systemes Thermiques, 78320 Le Mesnil Saint Denis (FR)
(72) Inventor: WANG, Wenfeng, Jingzhou, Hubei 434000 (CN); WAN, Xuanchen, Jingzhou, Hubei 434000 (CN); YAO, Ze, Jingzhou, Hubei 434000 (CN)
(74) Representative: Valeo Systèmes Thermiques
(86) International application number: PCT/CN2023/102732
(87) International publication number: WO 2024/002066

(57) **Abstract**

The present invention relates to a coolant distribution assembly, a thermal management module and a vehicle thermal management system. In the coolant distribution assembly provided by the present invention, a mounting opening and a channel opening of a distribution plate main body respectively face two sides in a thickness direction of the distribution plate main body, so the coolant distribution assembly is easy to assemble. The thermal management module provided by the present invention comprises the coolant distribution assembly mentioned above. The vehicle thermal management system provided by the present invention comprises the thermal management module mentioned above.

## Description

### Technical Field

The present invention relates to a coolant distribution assembly, a thermal management module and a vehicle thermal management system.

### Background Art

As vehicles develop toward electrification, vehicle thermal management systems are becoming more and more important. The thermal management system of a vehicle needs to thermally manage not only the cabin environment but also modules such as the battery and electric motor, and therefore needs to include a large number of refrigerant pipelines and coolant pipelines to connect various components; as a result, the thermal management system has a relatively complex structure and a relatively large volume.

There exists in the prior art a thermal management module that uses highly customized components to reduce the number of refrigerant pipelines and coolant pipelines mentioned above, thereby reducing the volume of the thermal management system. The thermal management module comprises a coolant distribution assembly. The coolant distribution assembly in the prior art has the disadvantage of being difficult to assemble.

### Summary of the Invention

An objective of the present invention is to provide a coolant distribution assembly with the advantage of being easy to assemble.

Another objective of the present invention is to provide a thermal management module comprising the abovementioned coolant distribution assembly.

Another objective of the present invention is to provide a vehicle thermal management system comprising the abovementioned thermal management module.

A coolant distribution assembly for achieving the objective comprises a distribution plate main body, a cover and a coolant distribution unit; the distribution plate main body has a mounting cavity, a channel cavity and a through-hole; the through-hole establishes communication between the mounting cavity and the channel cavity;
the mounting cavity has a mounting opening, and the channel cavity has a channel opening; the mounting opening and the channel opening respectively face two sides in a thickness direction of the distribution plate main body;
the coolant distribution unit is mounted in the mounting cavity via the mounting opening, and the cover covers the channel opening.

In an embodiment, the cover has an interface part, the interface part being in communication with the channel cavity.

In an embodiment, the mounting cavity has a first bottom wall and a first side wall; in the thickness direction of the distribution plate main body, one end of the first side wall is connected to the first bottom wall, and another end of the first side wall defines the mounting opening;
the channel cavity has a second bottom wall and a second side wall; in the thickness direction of the distribution plate main body, one end of the second side wall is connected to the second bottom wall, and another end of the second side wall defines the channel opening;

in the mounting cavity, an edge of the through-hole is formed on the first side wall and/or the first bottom wall; in the channel cavity, an edge of the through-hole is formed on the second side wall and/or the second bottom wall.

In an embodiment, the mounting cavity has a first depth defined by the mounting opening and the first bottom wall in the thickness direction; the channel cavity has a second depth defined by the mounting opening and the second bottom wall in the thickness direction;
the first depth and the second depth at least partially coincide in the thickness direction, so as to define a coincidence zone; and at least a portion of the edge of the through-hole is located in the coincidence zone.

In an embodiment, the edge of the through-hole comprises a first edge and a second edge located in the channel cavity; the first edge is formed on the second bottom wall, and the second edge is formed on the second side wall.

In an embodiment, the edge of the through-hole comprises a third edge and a fourth edge located in the mounting cavity; the third edge is formed on the first bottom wall, and the fourth edge is formed on the first side wall.

In an embodiment, the coolant distribution unit comprises a coolant pump, and the mounting cavity comprises a pump mounting cavity;
the coolant pump is mounted in the pump mounting cavity, and the coolant pump is configured to cause coolant to be sucked into and discharged from the pump mounting cavity.

In an embodiment, the through-hole comprises an upstream through-hole and a downstream through-hole, and the channel cavity comprises an upstream channel cavity and a downstream channel cavity; the pump mounting cavity is in communication with the upstream channel cavity via the upstream through-hole, and the pump mounting cavity is in communication with the downstream channel cavity via the downstream through-hole;
the pump mounting cavity is configured to suck in coolant from the upstream channel cavity through the upstream through-hole, and discharge coolant to the downstream channel cavity through the downstream through-hole.

In an embodiment, the first bottom wall of the pump mounting cavity is sunk to form a vortex flow path, wherein the vortex flow path gradually widens in a direction toward the downstream through-hole.

In an embodiment, the pump mounting cavity comprises a first pump mounting cavity and a second pump mounting cavity; the coolant pump comprises a first coolant pump mounted in the first pump mounting cavity and a second coolant pump mounted in the second pump mounting cavity; the upstream through-hole comprises a first upstream through-hole and a second upstream through-hole; the downstream through-hole comprises a first downstream through-hole and a second downstream through-hole; the downstream channel cavity comprises a first downstream channel cavity and a second downstream channel cavity;
the first pump mounting cavity is configured to suck in coolant from the upstream channel cavity through the first upstream through-hole, and discharge coolant to the first downstream channel cavity through the first downstream through-hole; the second pump mounting cavity is configured to suck in coolant from the upstream channel cavity through the second upstream through-hole, and discharge coolant to the second downstream channel cavity through the second downstream through-hole.

In an embodiment, the interface part of the cover comprises a first interface part and a second interface part; the first interface part and the second interface part are separately in communication with the upstream channel cavity, wherein the first interface part and the first upstream through-hole are arranged in such a way as to have a common center line, and the second interface part and the second upstream through-hole are arranged in such a way as to have a common center line.

In an embodiment, the coolant distribution unit further comprises a coolant valve, and the mounting cavity further comprises a valve mounting cavity, the coolant valve being mounted in the valve mounting cavity,
wherein the coolant valve comprises a first coolant valve, and the valve mounting cavity comprises a first valve mounting cavity, the first coolant valve being mounted in the first valve mounting cavity;
the through-hole comprises a first intermediate through-hole, and the upstream channel cavity is in communication with the first valve mounting cavity via the first intermediate through-hole;
the first intermediate through-hole, the first upstream through-hole and the second upstream through-hole are distributed in an extension direction of the upstream channel cavity, wherein the second upstream through-hole is located between the first intermediate through-hole and the first upstream through-hole.

A thermal management module for achieving the objective comprises a first heat exchanger, a second heat exchanger and a coolant distribution assembly;
the first heat exchanger has a first coolant opening and a second coolant opening;
the second heat exchanger has a third coolant opening and a fourth coolant opening;
the coolant distribution assembly has a first distribution port, a second distribution port, a third distribution port, a first intermediate through-hole, an upstream channel cavity and a first downstream channel cavity;
the first coolant opening is in communication with the first distribution port; the second coolant opening is in communication with the second distribution port, and is in communication with the upstream channel cavity via the second distribution port and the first intermediate through-hole;
the third coolant opening is in communication with the third distribution port, and is in communication with the first downstream channel cavity via the third distribution port.

A vehicle thermal management system for achieving the objective comprises a heater core and a thermal management module; the thermal management module comprises a coolant distribution assembly; an outlet of the heater core is in communication with a first interface part of the coolant distribution assembly, and is in communication with an upstream channel cavity of the coolant distribution assembly via the first interface part.

The present invention has the following positive and progressive effects: in the coolant distribution assembly provided by the present invention, the mounting opening and the channel opening of the distribution plate main body respectively face two sides in the thickness direction of the distribution plate main body, so the cover and the coolant distribution unit can be fitted to the distribution plate main body at two sides of the distribution plate main body respectively, thus lowering the difficulty of assembly, so that the coolant distribution assembly is easy to assemble.

### Brief Description of the Drawings

The above and other features, properties and advantages of the present invention will become more obvious through the description below which refers to the drawings and embodiments, wherein:
Fig. 1 is a schematic drawing of a thermal management module.
Fig. 2 is a schematic drawing of a thermal management module with a support removed.
Fig. 3 is an exploded drawing of a thermal management module, with a support not shown.
Fig. 4 is a schematic drawing of a thermal management module, with a different support shown.
Figs. 5A and 5B are schematic drawings of a support and a coolant distribution assembly.
Figs. 6A and 6B are schematic drawings of a support, a coolant distribution assembly, a first heat exchanger, a second heat exchanger and a receiver/dryer.
Fig. 7 is a top view of a support, a coolant distribution assembly, a first heat exchanger and a receiver/dryer.
Fig. 8A is a schematic drawing of a coolant distribution assembly.
Fig. 8B is a top view of a distribution plate main body.
Fig. 9A is a schematic drawing of a distribution plate main body, showing the side on which a channel cavity is located.
Fig. 9B is a schematic drawing of a distribution plate main body, showing the side on which a mounting cavity is located.
Fig. 10A is a schematic drawing of a distribution plate main body, cut open in direction A-A in Fig. 8B.
Fig. 10B is a partial enlarged drawing of Fig. 10A.
Fig. 11 is a schematic drawing of part of a distribution plate main body, showing a first edge of a through-hole.
Fig. 12 is a schematic drawing of part of a distribution plate main body, showing a third edge and a fourth edge of a through-hole.
Fig. 13 is a top view of part of a distribution plate main body, showing a third edge of a through-hole.
Fig. 14 is a sectional view of part of a distribution plate main body, showing an upstream channel cavity.
Fig. 15A is a schematic drawing of a refrigerant valve assembly.
Fig. 15B is a schematic drawing of a valve body.
Fig. 16A is a schematic drawing of a valve body, cut open in direction B-B in Fig. 15B.
Fig. 16B is a top view of a valve body, cut open in direction B-B in Fig. 15B.
Fig. 17A is a schematic drawing of a valve body, showing a second valve body opening and a fourth valve body opening.
Fig. 17B is a schematic drawing of a refrigerant valve assembly, showing a second valve body opening and a fourth valve body opening.
Fig. 18 is a schematic drawing of a vehicle thermal management system.
Fig. 19 is a schematic drawing of a first operating mode of a vehicle thermal management system.
Fig. 20 is a schematic drawing of a second operating mode of a vehicle thermal management system.
Fig. 21 is a schematic drawing of a third operating mode of a vehicle thermal management system.
Fig. 22 is a schematic drawing of a fourth operating mode of a vehicle thermal management system.
Fig. 23 is a schematic drawing of a fifth operating mode of a vehicle thermal management system.
Fig. 24 is a schematic drawing of a sixth operating mode of a vehicle thermal management system.
Fig. 25 is a schematic drawing of a seventh operating mode of a vehicle thermal management system.
Fig. 26 is a schematic drawing of an eighth operating mode of a vehicle thermal management system.

### Detailed Description of the Invention

Several different implementations or embodiments of the implemented technical solution of the subject matter are disclosed below. To simplify the disclosed content, specific instances of elements and arrangements are described below, but of course, these are merely examples, and do not limit the scope of protection of the present invention. For example, the distribution of a first feature at a second feature as disclosed below may include an implementation in which the first and second features are distributed by direct connection, but may also include an implementation in which an additional feature is formed between the first and second features, so that there may be no direct connection between the first and second features. In addition, in this content, reference signs and/or letters might by repeated in different examples. This repetition is aimed at brevity and clarity, and does not in itself indicate a relationship between the implementations and/or structures to be discussed. Furthermore, when a first element is described as being connected or joined to a second element, this description includes an embodiment in which the first and second elements are directly connected or joined together, and also includes the addition of one or more other intervening elements such that the first and second elements are indirectly connected or joined together.

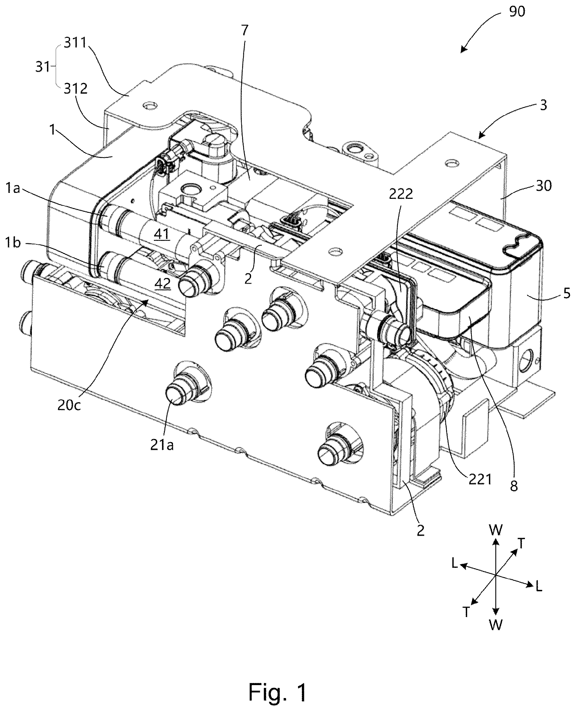

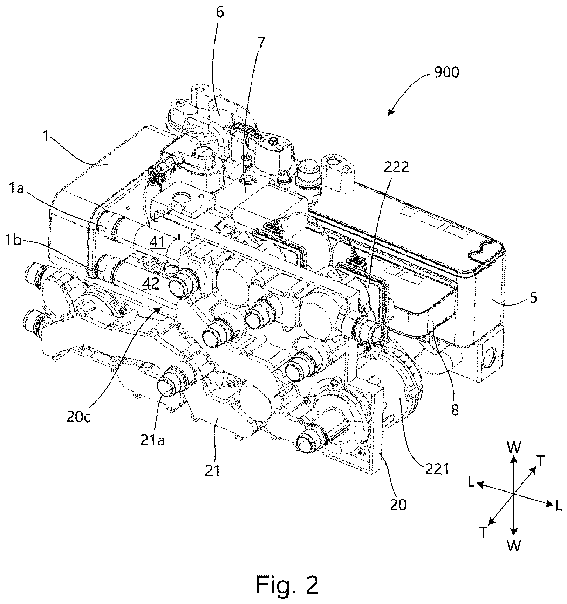

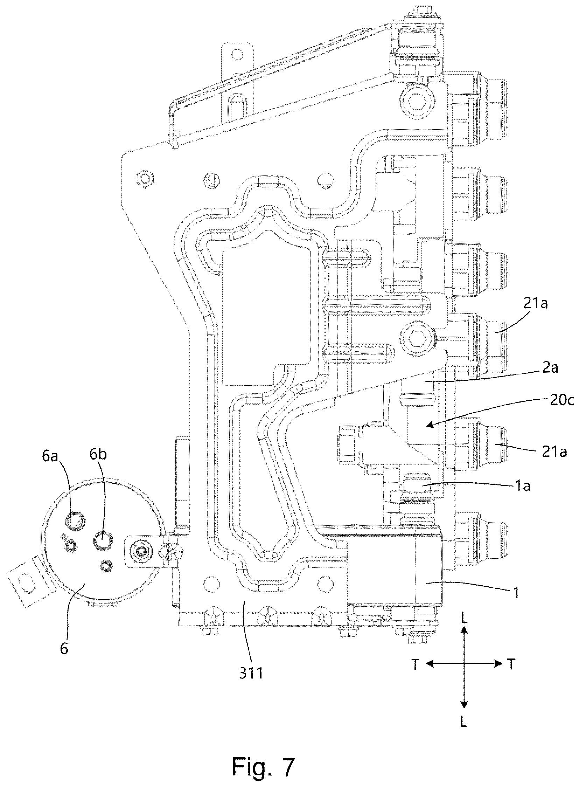

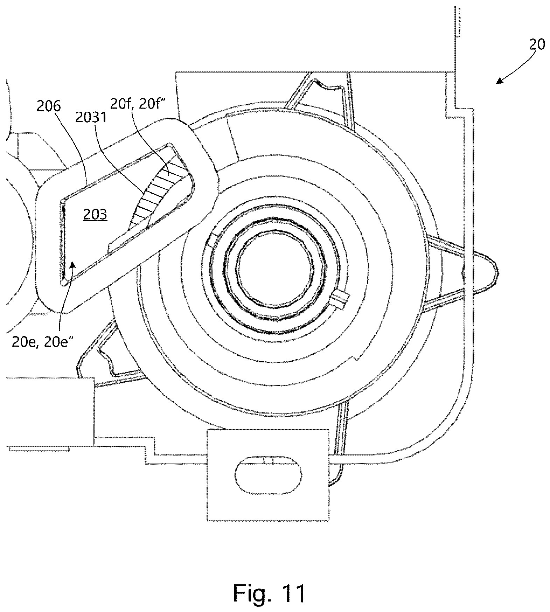

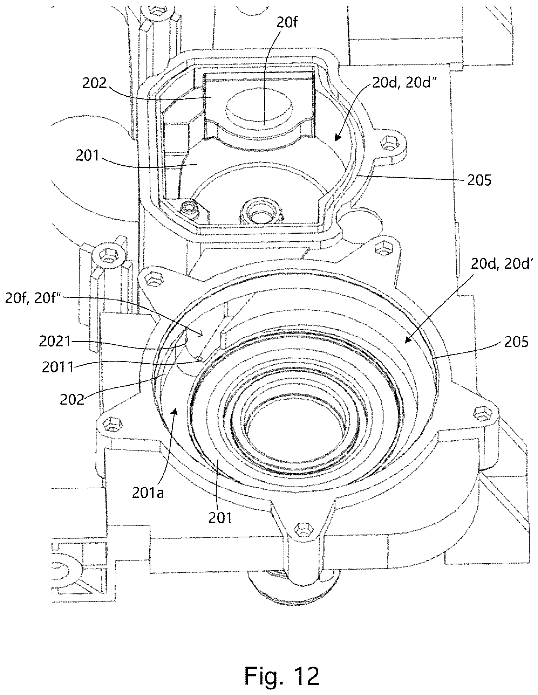

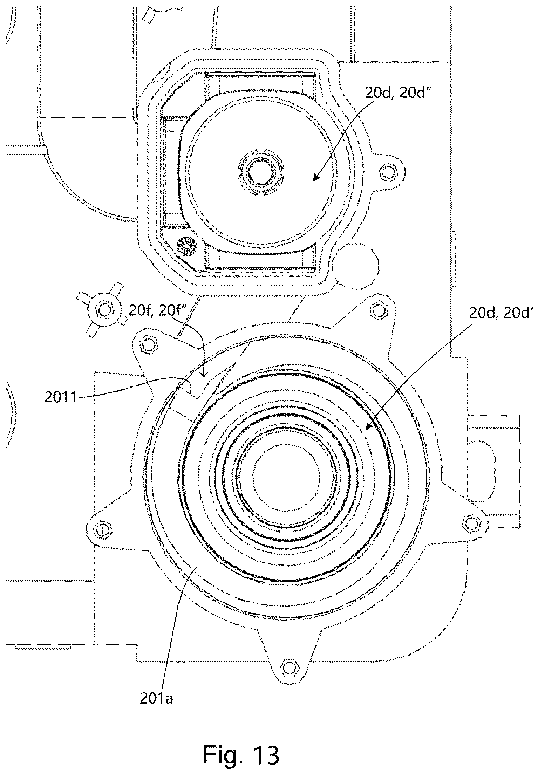

It must be noted that Figs. 1 - 26 are all merely examples and are not drawn to scale, and should not be regarded as limiting the scope of protection actually claimed for the present invention.

A vehicle thermal management system needs to thermally manage not only a cabin environment but also modules such as a battery and an electric motor. To realize this thermal management, the vehicle thermal management system comprises a refrigerant circuit and a coolant circuit. Refrigerant in the refrigerant circuit is driven by a compressor and flows through an object of thermal management, such as an air conditioning module for the cabin environment. Coolant in the coolant circuit is driven by a coolant pump and flows through an object requiring thermal management, such as the battery, electric motor, etc. The refrigerant in the refrigerant circuit exchanges heat with the coolant in the coolant circuit, so that the coolant attains a desired temperature. This heat exchange is achieved by means of a heat exchanger. To meet the demand for modularization, at least some of the components of the refrigerant circuit and/or the coolant circuit in the vehicle thermal management system are made as a single unit, thus forming a thermal management module.

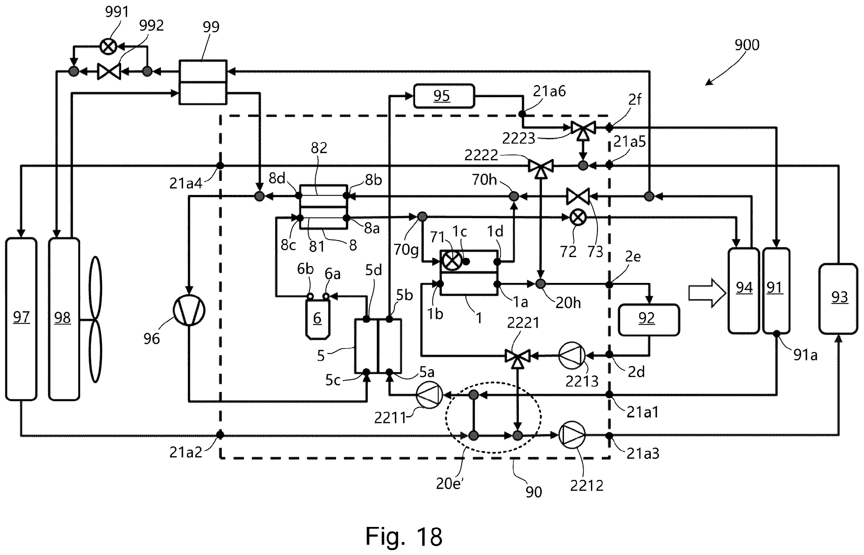

Fig. 18 shows a vehicle thermal management system 900 in an embodiment of the present invention, comprising a battery 92, an electric motor 93, an evaporator 94, a coolant heating device 95, a compressor 96, a radiator 97, an external heat exchanger 98, an external intermediate heat exchanger 99, an external electronic expansion valve 991, an external stop valve 992 and a thermal management module 90. "External" is in relation to the thermal management module 90, meaning outside the thermal management module 90.

Figs. 1 - 4 show a thermal management module 90 in an embodiment of the present invention, comprising a first heat exchanger 1, a coolant distribution assembly 2 and a support 3. The first heat exchanger 1 has a first coolant opening 1a, a second coolant opening 1b, a first refrigerant opening 1c and a second refrigerant opening 1d. The first coolant opening 1a and the second coolant opening 1b define a coolant channel through the first heat exchanger 1, and the first refrigerant opening 1c and the second refrigerant opening 1d define a refrigerant channel through the first heat exchanger 1, wherein coolant in the coolant channel and refrigerant in the refrigerant channel undergo heat exchange inside the first heat exchanger 1. In one operating mode of the vehicle thermal management system 900, the first heat exchanger 1 is an evaporator, i.e. refrigerant evaporates in the first heat exchanger 1, so as to absorb heat from coolant, so that the temperature of coolant leaving the first heat exchanger 1 is reduced. The coolant distribution assembly 2 comprises a distribution plate main body 20; the distribution plate main body 20 has a first distribution port 2a and a second distribution port 2b; the first coolant opening 1a is connected to the first distribution port 2a and in communication therewith, and the second coolant opening 1b is connected to the second distribution port 2b and in communication therewith.

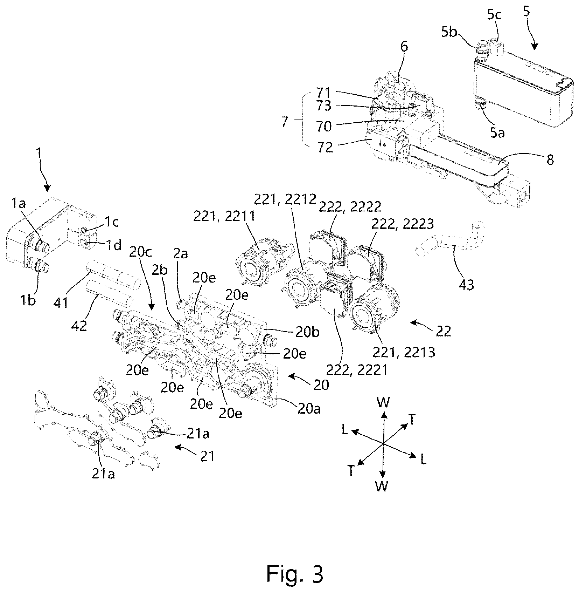

More specifically, referring to Fig. 3, the thermal management module 90 further comprises a first hose 41 and a second hose 42, wherein the first coolant opening 1a is connected to and in communication with the first distribution port 2a via the first hose 41, and the second coolant opening 1b is connected to and in communication with the second distribution port 2b via the second hose 42. The use of hoses for connection can reduce the transmission of vibration from the distribution plate main body 20 to the first heat exchanger 1.

In one operating mode of the vehicle thermal management system, coolant leaves the first heat exchanger 1 through the first coolant opening 1a, enters the distribution plate main body 20 through the first distribution port 2a, leaves the distribution plate main body 20 through the second distribution port 2b, and enters the first heat exchanger 1 through the second coolant opening 1b.

The first heat exchanger 1 and the distribution plate main body 20 are separately mounted on the support 3, such that the first heat exchanger 1 and the refrigerant distribution assembly 2 are relatively independent of each other, so that the thermal management module 90 has high compatibility and low maintenance costs.

As shown in Figs. 1, 4, 5A, 5B, 6A, 6B and 7, the support 3 comprises a back plate 30 and a connecting plate 31; the distribution plate main body 20 is arranged opposite the back plate 30, and the connecting plate 31 is connected to the back plate 30 and the distribution plate main body 20 separately. This design enables a space to be formed between the distribution plate main body 20 and the back plate 30; this space can be used to mount other components of the thermal management module 90, such as a coolant distribution unit 22, which comprises a coolant pump 221 and/or a coolant valve 222. This helps to make the structure of the thermal management module 90 compact. More specifically, the coolant pump 221 and the coolant valve 222 are mounted on the distribution plate main body 20, and located on the side of the distribution plate main body 20 that faces the back plate 30.

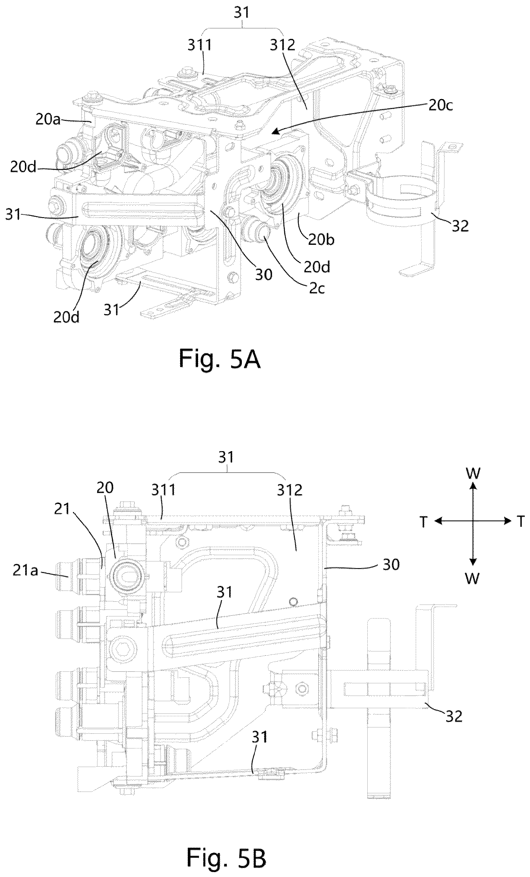

As shown in Figs. 1, 5A and 5B, the connecting plate 31 has a first plate part 311, the first plate part 311 being separately connected to the back plate 30 and the distribution plate main body 20, wherein the distribution plate main body 20 is located at an inner side of the first plate part 311. The connecting plate 31 also has a second plate part 312; the second plate part 312 is at an angle to the first plate part 311, and the second plate part 312 is connected to the distribution plate main body 20, wherein the distribution plate main body 20 is located at an inner side of the second plate part 312. Here, the inner side is the side that is closer to the center of the thermal management module 90, and an outer side is the side that is further away from the center of the thermal management module 90. Such a design enables the distribution plate main body 20 to be located at an inner side of the connecting plate 31, helping to make the structure of the thermal management module 90 compact; in addition, the fact that the distribution plate main body 20 is separately connected to the first plate part 311 and the second plate part 312 makes the connection between the distribution plate main body 20 and the support 3 relatively firm.

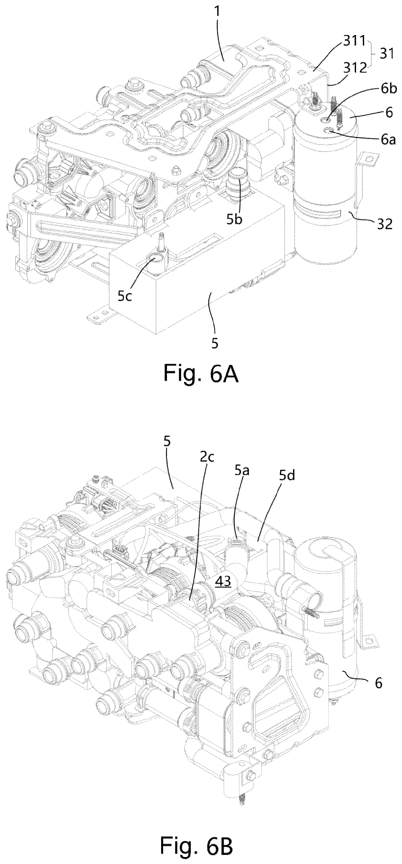

As shown in Figs. 6A and 6B, the first heat exchanger 1 is mounted on the second plate part 312, and located at the inner side of the side plate part 312 and the inner side of the top plate part 311. Here, the inner side is the side that is closer to the center of the thermal management module 90, and an outer side is the side that is further away from the center of the thermal management module 90. Such a design helps to make the structure of the thermal management module 90 compact.

Referring to Figs. 1, 2, 3 and 4, it can be seen that at least a portion of the first heat exchanger 1 coincides with the distribution plate main body 20 in a thickness direction T of the distribution plate main body 20. Such a design makes the structure of the thermal management module 90 in the thickness direction T compact. More specifically, the distribution plate main body 20 has a gap 20c extending in the thickness direction T; the first heat exchanger 1 extends into the gap 20c, so as to coincide with the distribution plate main body 20 in the thickness direction T.

The distribution plate main body 20 has a first part 20a and a second part 20b distributed in a width direction W thereof; the first part 20a projects beyond the second part 20b in a length direction L of the distribution plate main body 20, so as to form the gap 20c.

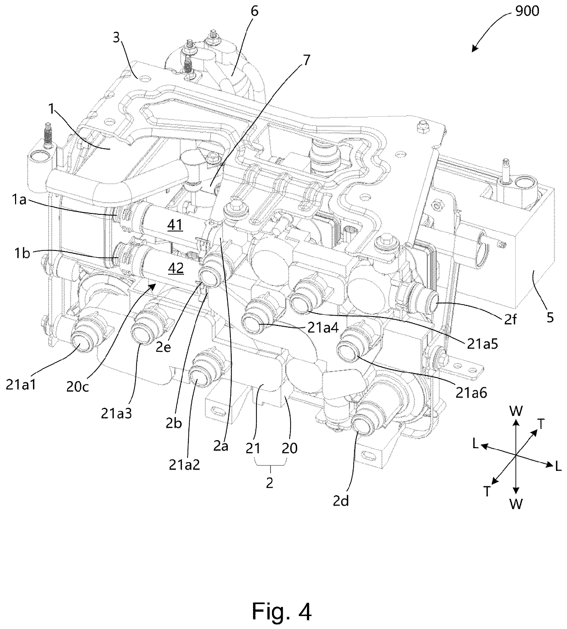

As can be seen from Figs. 3 and 4, the second part 20b has the first distribution port 2a and the second distribution port 2b; the first coolant opening 1a and the second coolant opening 1b are arranged in the gap 20c; the first coolant opening 1a and the second coolant opening 1b are respectively aligned with the first distribution port 2a and the second distribution port 2b; and the first hose 41 and the second hose 42 extend within the gap 20c. Such a design helps to make the structure of the thermal management module 90 compact, and can reduce the transmission of vibration from the distribution plate main body 20 to the first heat exchanger 1. In a specific embodiment, the first heat exchanger 1 is perpendicular to the distribution plate main body 20.

Referring to Figs. 6A and 6B, the thermal management module 90 further comprises a second heat exchanger 5 and a third hose 43; the second heat exchanger 5 has a third coolant opening 5a, a fourth coolant opening 5b, a third refrigerant opening 5c and a fourth refrigerant opening 5d, wherein the third coolant opening 5a and the fourth coolant opening 5b define a coolant channel of the second heat exchanger 5, and the third refrigerant opening 5c and the fourth refrigerant opening 5d define a refrigerant channel of the second heat exchanger 5. Coolant in the coolant channel of the second heat exchanger 5 undergoes heat exchange with refrigerant in the refrigerant channel of the second heat exchanger 5. In one operating mode of the vehicle thermal management system 900, the second heat exchanger 5 is a condenser, i.e. refrigerant condenses in the second heat exchanger 5, so as to release heat to coolant, so that the temperature of coolant leaving the second heat exchanger 5 is increased.

The distribution plate main body 20 also has a third distribution port 2c, and the third coolant opening 5a is connected to and in communication with the third distribution port 2c via the third hose 43, wherein the distribution plate main body 20 is arranged opposite the back plate 30, and the second heat exchanger 5 is mounted on the back plate 30, and located at an outer side of the back plate 30. In one operating mode of the vehicle thermal management system, coolant leaves the distribution plate main body 20 through the third distribution port 2c of the distribution plate main body 20, and enters the second heat exchanger 5 through the third coolant opening 5a.

Referring to Figs. 4, 6A and 6B, the thermal management module 90 further comprises a receiver/dryer 6, and the support 3 further comprises a mounting part 32, the mounting part 32 being connected to the second plate part 312; the receiver/dryer 6 is mounted on the mounting part 32 and connected to the first plate part 311, and an inlet 6a of the receiver/dryer 6 is in communication with the fourth refrigerant opening 5d. The receiver/dryer 6 has the inlet 6a and an outlet 6b, wherein the inlet 6a of the receiver/dryer 6 is in communication with the fourth refrigerant opening 5d of the second heat exchanger 5.

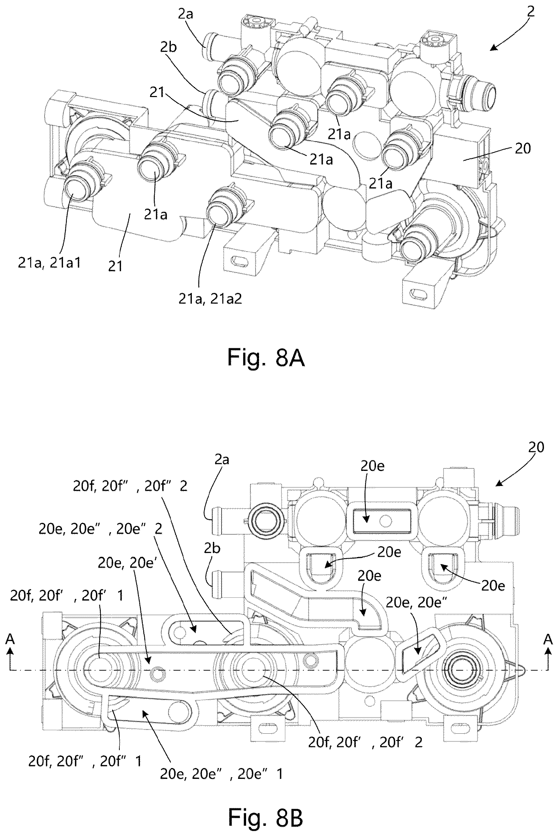

Figs. 8A - 14 show the coolant distribution assembly 2 in an embodiment of the present invention. As shown in Figs. 8A, 8B, 9A, 9B, 10A and 10B, the coolant distribution assembly 2 comprises the distribution plate main body 20, a cover 21 and the coolant distribution unit 22; the distribution plate main body 20 has a mounting cavity 20d, a channel cavity 20e and a through-hole 20f; the through-hole 20f establishes communication between the mounting cavity 20d and the channel cavity 20e; the mounting cavity 20d has a mounting opening 205, and the channel cavity 20e has a channel opening 206; the mounting opening 205 and the channel opening 206 respectively face two sides in the thickness direction T of the distribution plate main body 20; the coolant distribution unit 22 is mounted in the mounting cavity 20d via the mounting opening 205; and the cover 21 covers the channel opening 206. Such a design makes the coolant distribution assembly 2 easy to assemble. In a specific embodiment, the cover 21 and the distribution plate main body 20 are connected by heat fusion welding to form a single body.

Referring to Fig. 8A, the cover 21 has an interface part 21a, the interface part 21a being in communication with the channel cavity 20e. The interface part 21a can be in communication with a coolant pipeline outside the thermal management module 90.

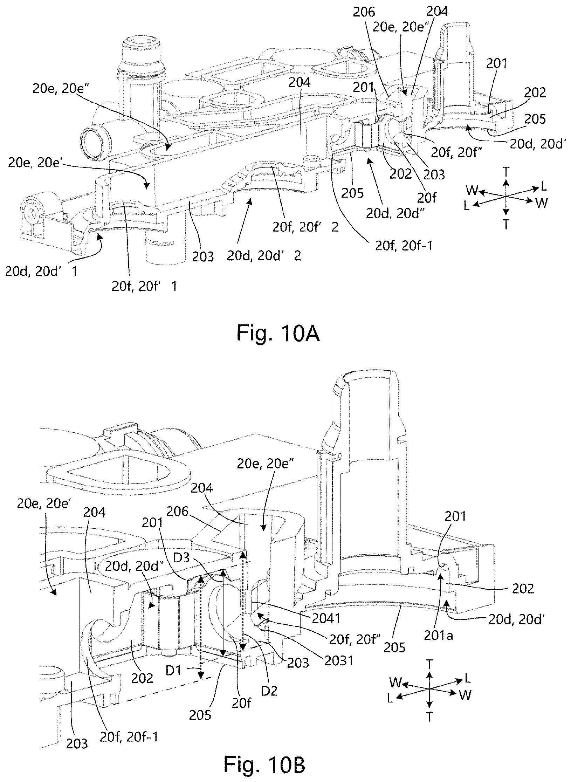

Continuing to refer to Figs. 10A and 10B, the mounting cavity 20d has a first bottom wall 201 and a first side wall 202; in the thickness direction T of the distribution plate main body 20, one end of the first side wall 202 is connected to the first bottom wall 201, and another end of the first side wall 202 defines the mounting opening 205; the channel cavity 20e has a second bottom wall 203 and a second side wall 204; in the thickness direction T of the distribution plate main body 20, one end of the second side wall 204 is connected to the second bottom wall 203, and another end of the second side wall 204 defines the channel opening 206; in the mounting cavity 20d, an edge of the through-hole 20f is formed on the first side wall 202 and/or the first bottom wall 201; in the channel cavity 20e, an edge of the through-hole 20f is formed on the second side wall 204 and/or the second bottom wall 203. Such a design allows the mounting cavity 20d and the channel cavity 20e to be distributed more densely on the distribution plate main body 20.

As shown in Fig. 10B, the mounting cavity 20d has a first depth D1 defined by the mounting opening 205 and the first bottom wall 201 in the thickness direction T; the channel cavity 20e has a second depth D2 defined by the mounting opening 206 and the second bottom wall 203 in the thickness direction T; the first depth D1 and the second depth D2 at least partially coincide in the thickness direction T, so as to define a coincidence zone D3; and at least a portion of the edge of the through-hole 20f is located in the coincidence zone 20g. Such a design makes the structure of the distribution plate main body 20 in the thickness direction T compact.

Referring to Figs. 10B, 11 and 12, the edge of the through-hole 20f comprises a first edge 2031 and a second edge 2041 located in the channel cavity 20e; the first edge 2031 is formed on the second bottom wall 203, and the second edge 2041 is formed on the second side wall 204. The edge of the through-hole 20f further comprises a third edge 2011 and a fourth edge 2021 located in the mounting cavity 20d; the third edge 2011 is formed on the first bottom wall 201, and the fourth edge 2021 is formed on the first side wall 202. Such a design increases the area of the through-hole 20f, thereby allowing the passage of coolant at a greater flow rate.

Referring to Figs. 1, 2, 3, 9B, 10A and 10B, the coolant distribution unit 22 comprises the coolant pump 221, and the mounting cavity 20d comprises a pump mounting cavity 20d'; the coolant pump 221 is mounted in the pump mounting cavity 20d', and the coolant pump 221 is configured to cause coolant to be sucked into and discharged from the pump mounting cavity 20d'. The coolant distribution unit 22 further comprises the coolant valve 222, and the mounting cavity 20d further comprises a valve mounting cavity 20d", the coolant valve 222 being configured to control the flow of coolant in the valve mounting cavity 20d".

As shown in Fig. 8B, the through-hole 20f comprises an upstream through-hole 20f' and a downstream through-hole 20f", and the channel cavity 20e comprises an upstream channel cavity 20e' and a downstream channel cavity 20e"; the pump mounting cavity 20d' is in communication with the upstream channel cavity 20e' via the upstream through-hole 20f'; the pump mounting cavity 20d' is in communication with the downstream channel cavity 20e" via the downstream through-hole 20f"; the pump mounting cavity 20d' is configured to suck in coolant from the upstream channel cavity 20e' through the upstream through-hole 20f', and discharge coolant to the downstream channel cavity 20e" through the downstream through-hole 20f".

As shown in Figs. 10B, 12 and 13, the first bottom wall 201 of the pump mounting cavity 20d' is sunk to form a vortex flow path 201a, wherein the vortex flow path 201a gradually widens in a direction toward the downstream through-hole 20f".

Referring to Figs. 3, 9B, 10A, 14 and 18, the pump mounting cavity 20d' comprises a first pump mounting cavity 20d'1 and a second pump mounting cavity 20d'2; the coolant pump 221 comprises a first coolant pump 2211 mounted in the first pump mounting cavity 20d'1 and a second coolant pump 2212 mounted in the second pump mounting cavity 20d'2, and further comprises a third coolant pump 2213; the upstream through-hole 20f' comprises a first upstream through-hole 20f'1 and a second upstream through-hole 20f'2; the downstream through-hole 20f" comprises a first downstream through-hole 20f"1 and a second downstream through-hole 20f"2; and the downstream channel cavity 20e" comprises a first downstream channel cavity 20e"1 and a second downstream channel cavity 20e"2.

The first pump mounting cavity 20d'1 is configured to suck in coolant from the upstream channel cavity 20e' through the first upstream through-hole 20f'1, and discharge coolant to the first downstream channel cavity 20e"1 through the first downstream through-hole 20f"1; the second pump mounting cavity 20d'2 is configured to suck in coolant from the upstream channel cavity 20e' through the second upstream through-hole 20f'2, and discharge coolant to the second downstream channel cavity 20e"2 through the second downstream through-hole 20f"2. This design allows the first pump mounting cavity 20d'1 and the second pump mounting cavity 20d'2 to share the same upstream channel cavity 20e', thereby making the structure of the distribution plate main body 20 compact.

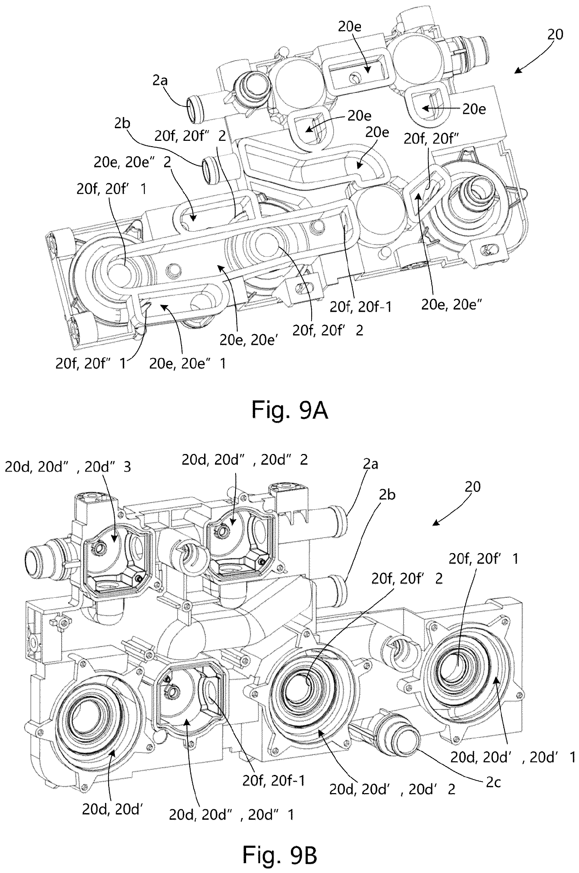

Continuing to refer to Fig. 9A, the first upstream through-hole 20f'1 and the second upstream through-hole 20f'2 are spaced apart by a certain distance in an extension direction of the upstream channel cavity 20e'.

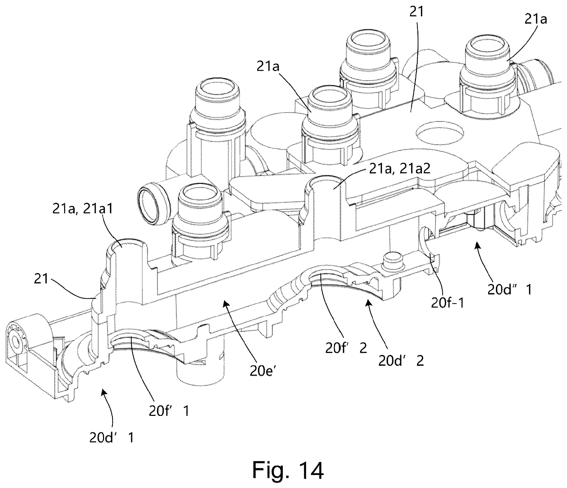

Referring to Fig. 14, the interface part 21a of the cover 21 comprises a first interface part 21a1, a second interface part 21a2, a third interface part 21a3, a fourth interface part 21a4, a fifth interface part 21a5 and a sixth interface part 21a6, wherein the first interface part 21a1 and the second interface part 21a2 are separately in communication with the upstream channel cavity 20e', wherein the first interface part 21a1 and the first upstream through-hole 20f'1 are arranged in such a way as to have a common center line, and the second interface part 21a2 and the second upstream through-hole 20f'2 are arranged in such a way as to have a common center line. With such a design, coolant entering the upstream channel cavity 20e' from the first interface part 21a1 is able to enter the first pump mounting cavity 20d'1 through the first upstream through-hole 20f'1 along the shortest path, and coolant entering the upstream channel cavity 20e' from the second interface part 21a2 is able to enter the second pump mounting cavity 20d'2 through the second upstream through-hole 20f'2 along the shortest path. This can effectively reduce the possibility that coolant entering the upstream channel cavity 20e' from the first interface part 21a1 will enter the second pump mounting cavity 20d'2, and can also effectively reduce the possibility that coolant entering the upstream channel cavity 20e' from the second interface part 21a2 will enter the first pump mounting cavity 20d'1. The third interface part 21a3, the fourth interface part 21a4, the fifth interface part 21a5 and the sixth interface part 21a6 are respectively in communication with the corresponding channel cavity 20e.

Continuing to refer to Figs. 3, 9A, 9B, 14 and 18, the coolant distribution unit 22 further comprises the coolant valve 222; the mounting cavity 20d further comprises a valve mounting cavity 20d"; and the coolant valve 222 is mounted in the valve mounting cavity 20d", wherein the coolant valve 222 comprises a first coolant valve 2221, a second coolant valve 2222 and a third coolant valve 2223; the valve mounting cavity 20d" comprises a first valve mounting cavity 20d"1, a second valve mounting cavity 20d"2 and a third valve mounting cavity 20d"3; the first coolant valve 2221 is mounted in the first valve mounting cavity 20d"1, the second coolant valve 2222 is mounted in the second valve mounting cavity 20d"2, and the third coolant valve 2223 is mounted in the third valve mounting cavity 20d"3; the through-hole 20f comprises a first intermediate through-hole 20f-1; the upstream channel cavity 20e' is in communication with the first valve mounting cavity 20d"1 via the first intermediate through-hole 20f-1; the first intermediate through-hole 20f-1, the first upstream through-hole 20f'1 and the second upstream through-hole 20f'2 are distributed in the extension direction of the upstream channel cavity 20e', wherein the second upstream through-hole 20f'2 is located between the first intermediate through-hole 20f-1 and the first upstream through-hole 20f'1. With such a design, coolant entering the upstream channel cavity 20e' from the first intermediate through-hole 20f-1 is able to pass through the second upstream through-hole 20f'2 first, and enters the second pump mounting cavity 20d'2 through the second upstream through-hole 20f'2 as much as possible, thereby reducing the possibility of this coolant entering the first pump mounting cavity 20d'1 through the first upstream through-hole 20f'1.

Referring to Figs. 1, 2, 3, 4, 6A, 6B, 9A, 9B and 18, the thermal management module 90 comprises the first heat exchanger 1, the second heat exchanger 5 and the coolant distribution assembly 2; the first heat exchanger 1 has the first coolant opening 1a and the second coolant opening 1b; the second heat exchanger 5 has the third coolant opening 5a and the fourth coolant opening 5b; the coolant distribution assembly 2 has the first distribution port 2a, the second distribution port 2b, the third distribution port 2c, the first intermediate through-hole 20f-1, the upstream channel cavity 20e' and the first downstream channel cavity 20e"1; the first coolant opening 1a is connected to and in communication with the first distribution port 2a; the second coolant opening 1b is connected to and in communication with the second distribution port 2b, and is in communication with the upstream channel cavity 20e' via the second distribution port 2b and the first intermediate through-hole 20f-1; the third coolant opening 5a is connected to and in communication with the third distribution port 2c, and is in communication with the first downstream channel cavity 20e"1 via the third distribution port 2c.

Continuing to refer to Fig. 18, the vehicle thermal management system 900 comprises a heater core 91 and the thermal management module 90; the thermal management module 90 comprises the coolant distribution assembly 2; an outlet 91a of the heater core 91 is in communication with the first interface part 21a1 of the coolant distribution assembly 2, and is in communication with the upstream channel cavity 20e' of the coolant distribution assembly 2 via the first interface part 21a1.

In one operating mode of the vehicle thermal management system 900, coolant cooled by the first heat exchanger 1 leaves the first heat exchanger 1 through the second coolant opening 1b, then enters the distribution plate main body 20 through the second distribution port 2b, and enters the upstream channel cavity 20e' through the first valve mounting cavity 20d"1 and the first intermediate through-hole 20f-1 under the control of the first coolant valve 2221; coolant heated by the heater core 91 leaves the heater core 91 through the outlet 91a, and enters the upstream channel cavity 20e' through the first interface part 21a1. Since the first interface part 21a1 and the first upstream through-hole 20f'1 are arranged in such a way as to have a common center line, coolant heated by the heater core 91 is able to enter the first pump mounting cavity 20d'1 through the first upstream through-hole 20f'1 as much as possible. Since the second upstream through-hole 20f'2 is closer to the first intermediate through-hole 20f-1 than the first upstream through-hole 20f'1 is, coolant cooled by the first heat exchanger 1 is able to enter the second pump mounting cavity 20d'2 through the second upstream through-hole 20f'2 as much as possible. Thus, in this operating mode of the vehicle thermal management system 900, coolant heated by the heater core 91 and coolant cooled by the first heat exchanger 1 can avoid mixing in the upstream channel cavity 20e' as much as possible; this helps to improve the efficiency of the vehicle thermal management system 900.

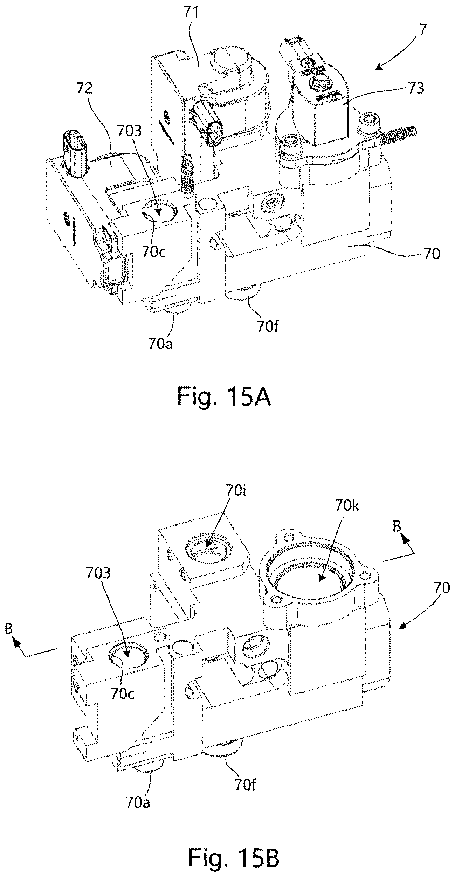

Figs. 15A - 17B show a refrigerant valve assembly 2 in an embodiment of the present invention. The refrigerant valve assembly 2 comprises a valve body 70; the valve body 70 has a first valve body opening 70a, a second valve body opening 70b, a third valve body opening 70c, a first intermediate cavity 70g, a fourth valve body opening 70d, a fifth valve body opening 70e, a sixth valve body opening 70f and a second intermediate cavity 70h, wherein the first intermediate cavity 70g defines a first internal channel 701, a second internal channel 702 and a third internal channel 703 with the first valve body opening 70a, the second valve body opening 70b and the third valve body opening 70c respectively; and the second intermediate cavity 70h defines a fourth internal channel 704, a fifth internal channel 705 and a sixth internal channel 706 with the fourth valve body opening 70d, the fifth valve body opening 70e and the sixth valve body opening 70f respectively. Such a design helps to reduce the number of openings in the valve body 70, thereby making the structure of the valve body 70 compact.

In a specific embodiment, the first valve body opening 70a is an inlet, and the second valve body opening 70b and the third valve body opening 70c are outlets. Refrigerant enters the valve body 70 through the first valve body opening 70a, and flows into the first intermediate cavity 70g through the first internal channel 701, then splits into two streams in the first intermediate cavity 70g; one stream flows toward the second valve body opening 70b through the second internal channel 702, and the other stream flows toward the third valve body opening 70c through the third internal channel 703. The refrigerant leaves the valve body 70 through the second valve body opening 70b and the third valve body 70c separately. It can be seen that the first valve body opening 70a acting as an inlet is shared by the second valve body opening 70b and the third valve body opening 70c which act as outlets. Such a design helps to reduce the number of openings in the valve body 70, thereby making the structure of the valve body 70 compact.

The valve body 70 also has a seventh valve body opening 70L, the seventh valve body opening 70L being in communication with the first internal channel 701. One portion of the refrigerant entering the valve body 70 through the first valve body opening 70a flows toward the seventh valve body opening 70L, and another portion flows toward the first intermediate cavity 70g. This design increases the scope of application of the valve body 70.

Further, the fourth valve body opening 70d and the fifth valve body opening 70e are inlets, and the sixth valve body opening 70f is an outlet. Two streams of refrigerant enter the valve body 70 through the fourth valve body opening 70d and the fifth valve body opening 70e separately, flow toward the second intermediate cavity 70h along the fourth internal channel 704 and the fifth internal channel 705 separately, and converge in the second intermediate cavity 70h to form a single stream, which then flows toward the sixth valve body opening 70f along the sixth internal channel 706, and leaves the valve body 70 through the sixth valve body opening 70f. It can be seen that the sixth valve body opening 70f acting as an outlet is shared by the fourth valve body opening 70d and the fifth valve body opening 70e which act as inlets. Such a design helps to reduce the number of openings in the valve body 70, thereby making the structure of the valve body 70 compact.

The valve body 70 also has an eighth valve body opening 70M, the eighth valve body opening 70M being in communication with the fifth internal channel 705. Refrigerant entering the valve body 70 through the eighth valve body opening 70M and refrigerant entering the valve body 70 through the fifth valve body opening 70e merge and then flow toward the second intermediate cavity 70h. This design increases the scope of application of the valve body 70.

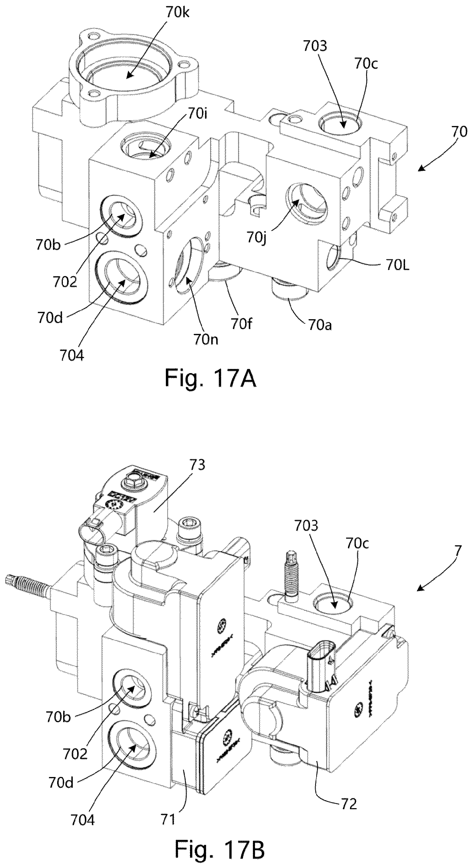

As shown in Fig. 17A, the valve body 70 also has a sensor opening 70n, and a first expansion valve 71 comprises a sensor (not shown in the drawings). The sensor is mounted in the sensor opening 70n, and at least partially located in the fourth internal channel 704, to test refrigerant in the fourth internal channel 704.

In a specific embodiment, refrigerant entering the valve body 70 through the first valve body opening 70a is high-pressure, unthrottled refrigerant, and refrigerant leaving the valve body 70 through the second valve body opening 70b and the third valve body opening 70c is low-pressure, throttled refrigerant. Refrigerant entering the valve body 70 through the fourth valve body opening 70d and the fifth valve body opening 70e is low-pressure, evaporated refrigerant, and refrigerant leaving the valve body 70 through the sixth valve body opening 70f is low-pressure, evaporated refrigerant.

Referring to Figs. 15A, 15B, 17A and 17B, the refrigerant valve assembly 7 further comprises the first expansion valve 71 and a second expansion valve 72; the valve body 70 also has a first valve cavity 70i and a second valve cavity 70j; the first valve cavity 70i is in communication with the second internal channel 702, and the second valve cavity 70j is in communication with the third internal channel 703; the first expansion valve 71 is arranged in the first valve cavity 70i, for the purpose of throttling refrigerant passing through the second internal channel 702; and the second expansion valve 72 is arranged in the second valve cavity 70j, for the purpose of throttling refrigerant in the third internal channel 703. Such a design enables the refrigerant valve assembly 7 to have at least two channels for throttling refrigerant, thus increasing the degree of integration and compactness of the refrigerant valve assembly 7.

Continuing to refer to Figs. 15A, 15B, 17A and 17B, the refrigerant valve assembly 7 further comprises a stop valve 73; the valve body 70 also has a third valve cavity 70k, the third valve cavity 70k being in communication with the fifth mounting channel 705; and the stop valve 73 is mounted in the third mounting cavity 70k, for the purpose of controlling the flow of refrigerant in the fifth mounting channel 705. Such a design enables the refrigerant valve assembly 7 to control the flow of coolant in the fifth mounting channel 705, thereby enabling the refrigerant valve assembly 7 to adapt to various operating modes of the vehicle thermal management system 900.

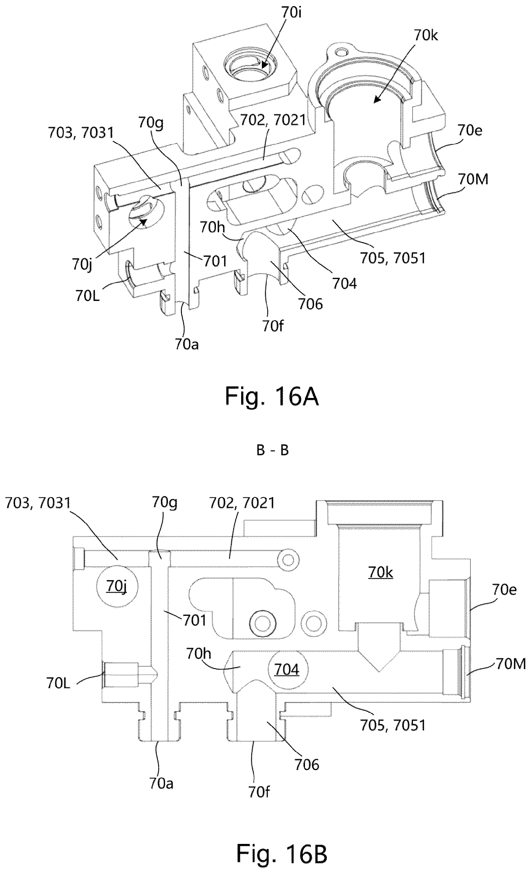

Referring to Figs. 16A and 16B,the first valve body opening 70a, the first internal channel 701, the first intermediate cavity 70g, the sixth valve body opening 70f, the sixth internal channel 706 and the second intermediate cavity 70h are located on the same cross section B-B. Such a design enables the first valve body opening 70a, the first internal channel 701, the first intermediate cavity 70g, the sixth valve body opening 70f, the sixth internal channel 706 and the second intermediate cavity 70h to all be located on the same cross section B-B, so that the structure of the valve body 70 in a direction perpendicular to the cross section B-B is compact.

Continuing to refer to Figs. 16A and 16B, the second internal channel 702 has a first segment 7021 connected to the first intermediate cavity 70g, the third internal channel 703 has a second segment 7031 connected to the first intermediate cavity 70g, and the first segment 7021 and the second segment 7031 are located on the cross section B-B. Such a design allows at least part of the second internal channel 702 and at least part of the third internal channel 703 to also be located on the cross section B-B, so that the structure of the valve body 70 in a direction perpendicular to the cross section B-B is compact.

Continuing to refer to Figs. 16A and 16B, the fifth mounting channel 705 has a third segment 7051 connected to the second intermediate cavity 70h; the third segment 7051 is located on the cross section B-B; the fourth internal channel 704 is connected to and in communication with the third segment 7051; and the fourth internal channel 704 extends perpendicular to the cross section B-B.

As shown in Figs. 1, 2, 3 and 18, the thermal management module 90 further comprises an intermediate heat exchanger 8, the intermediate heat exchanger 8 being connected to the valve body 70; the intermediate heat exchanger 8 has a first heat exchanger opening 8a, a second heat exchanger opening 8b, a third heat exchanger opening 8c and a fourth heat exchanger opening 8d; the first heat exchanger opening 8a and the third heat exchanger opening 8c define a first intermediate heat exchange channel 81; the second heat exchanger opening 8b and the fourth heat exchanger opening 8d define a second intermediate heat exchanger channel 82, wherein the first heat exchanger opening 8a is in communication with the first valve body opening 70a, the second heat exchanger opening 8b is in communication with the sixth valve body opening 70f, the third heat exchanger opening 8c is in communication with the outlet 6b of the receiver/dryer 6, and the fourth heat exchanger opening 8d is in communication with an inlet of the compressor 96. Refrigerant in the first intermediate heat exchange channel 81 undergoes heat exchange with refrigerant in the second intermediate heat exchanger channel 82.

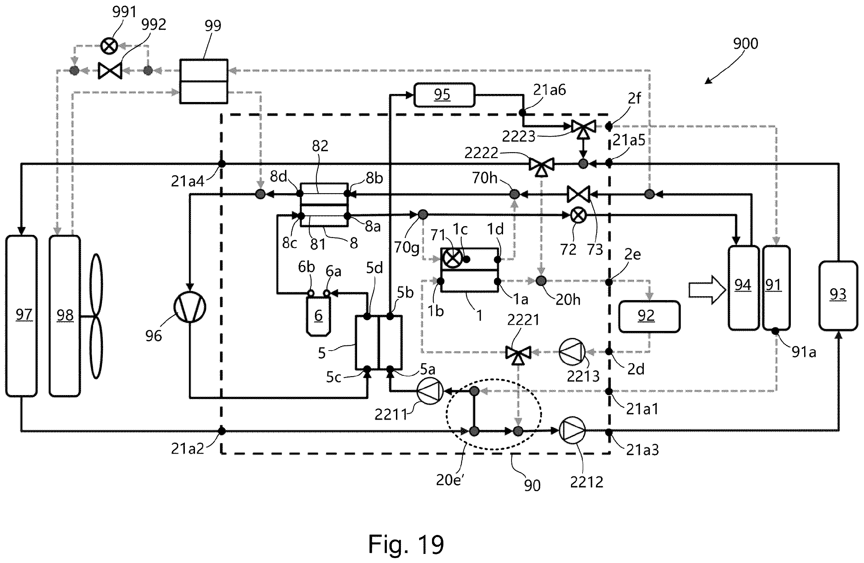

Figs. 19 - 26 show multiple operating modes of the vehicle thermal management system 900. In a first operating mode of the vehicle thermal management system 900 shown in Fig. 19, the external electronic expansion valve 991 and the external stop valve 992 are both in a closed state, and there is no refrigerant flow in the external heat exchanger 98. There is no coolant flow in the heater core 91.

Refrigerant discharged from the compressor 96 enters the second heat exchanger 5 through the third refrigerant opening 5c, and leaves the second heat exchanger 5 through the fourth refrigerant opening 5d. In the second heat exchanger 5, the refrigerant condenses and releases heat. The refrigerant then passes through the receiver/dryer 6 and the first intermediate heat exchange channel 81 of the intermediate heat exchanger 8, and enters the valve body 70 through the first valve body opening 70a, flowing toward the first intermediate cavity 70g. The first expansion valve 71 is closed; consequently, within the first heat exchanger 1, there is no flow of refrigerant from the first intermediate cavity 70g. The second expansion valve 72 is opened and throttles the refrigerant from the first intermediate cavity 70g; the throttled refrigerant enters the evaporator 94 and evaporates, so as to absorb heat from air flowing past the evaporator 94, thereby generating a cooled airflow for delivery to the cabin. The refrigerant flowing out of the evaporator 94 enters the valve body 70 through the fifth valve body opening 70e. The stop valve 73 is in an open state, allowing the refrigerant to pass through the second intermediate cavity 70h and the sixth valve body opening 70f and flow out of the valve body 70. The refrigerant flowing out of the valve body 70 through the sixth valve body opening 70f passes through the second intermediate heat exchange channel 82 of the intermediate heat exchanger 8, and enters a gas discharge port of the compressor 96.

Coolant flowing from an outlet of the first coolant pump 2211 enters the second heat exchanger 5 through the third coolant opening 5a, and leaves the second heat exchanger 5 through the fourth coolant opening 5b. Within the second heat exchanger 5, the heat released by refrigerant is absorbed by the coolant, and the temperature of the refrigerant rises. The fourth coolant opening 5b is in communication with an inlet of the coolant heating device 95; the coolant leaving the second heat exchanger 5 enters the coolant heating device 95. An outlet of the coolant heating device 95 is in communication with the sixth interface part 21a6. Coolant leaving the coolant heating device 95 enters the coolant distribution assembly 2 through the sixth interface part 21a6 and, under the control of the third coolant valve 2223, merges with coolant leaving the electric motor 93. The merged coolant flows toward the fourth interface part 21a4 under the control of the second coolant valve 2222, and leaves the coolant distribution assembly 2 through the fourth interface part 21a4, flowing toward the radiator 97. An outlet of the radiator 97 is in communication with the second interface part 21a2, and coolant leaving the radiator 97 enters the coolant distribution assembly 2, more specifically the upstream channel cavity 20e', through the second interface part 21a2; one portion within the upstream channel cavity 20e' flows toward the third coolant opening 5a under the driving action of the first coolant pump 2211 and enters the second heat exchanger 5, and another portion within the upstream channel cavity 20e' leaves the coolant distribution assembly 2 through the second coolant pump 2212 and the third interface part 21a3, and flows toward the electric motor 93. The first coolant valve 2221 and the second coolant valve 2222 are configured so that there is no coolant flow in the first heat exchanger 1, and no coolant passing through the third coolant pump 2213 and the battery 92, so that the battery 92 will not undergo heat exchange with coolant.

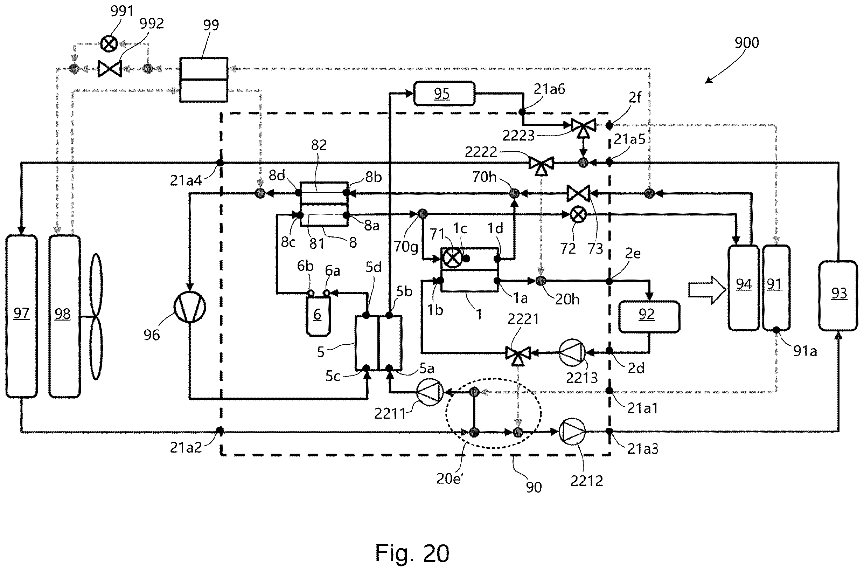

In a second operating mode of the vehicle thermal management system 900 shown in Fig. 20, in contrast to the first operating mode, the first coolant valve 2221 and the second coolant valve 2222 are configured so that there is coolant flow in the first heat exchanger 1 and the third coolant pump 2213, and the first expansion valve 71 is opened, so that within the first heat exchanger 1, there is flow of refrigerant from the first intermediate cavity 70g. The refrigerant in the first heat exchanger 1 evaporates, so as to absorb heat from the coolant in the first heat exchanger 1, thereby causing the temperature of the coolant passing through the first heat exchanger 1 to drop, and the reduced-temperature coolant is able to cool the battery 92. The distribution plate main body 20 also has a fourth distribution port 2d and a fifth distribution port 2e. The coolant used to cool the battery 92 enters and leaves the coolant distribution assembly 2 through the fourth distribution port 2d and the fifth distribution port 2e, wherein the distribution plate main body 20 also has a merging cavity 20h, the merging cavity 20h being in communication with the first distribution port 2a and the fifth distribution port 2e separately. The merging cavity 20h is also in communication with the second valve mounting cavity 20d"2.

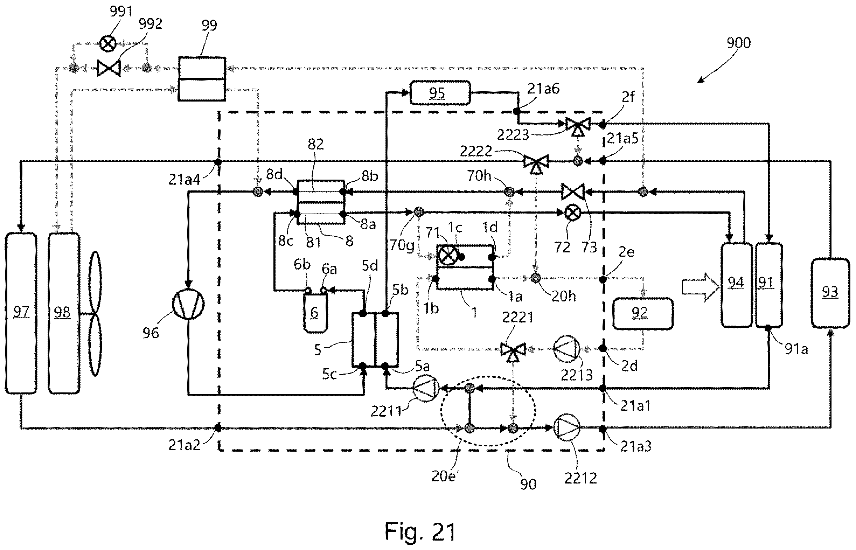

In a third operating mode of the vehicle thermal management system 900 shown in Fig. 21, in contrast to the first operating mode, higher-temperature coolant leaving the coolant heating device 95 enters the coolant distribution assembly 2 through the sixth interface part 21a6, and flows toward the heater core 91 under the control of the third coolant valve 2223, so that the heater core 91 can heat the airflow cooled by the evaporator 94. The distribution plate main body 20 also has a sixth distribution port 2f. The coolant passing through the heater core 91 enters and leaves the coolant distribution assembly 2 through the first interface part 21a1 and the sixth distribution port 2f. The coolant leaving the heater core 91 will enter the upstream channel cavity 20e' after entering the coolant distribution assembly 2 through the first interface part 21a1. The coolant leaving the electric motor 93 no longer merges with the coolant leaving the coolant heating device 95, and instead flows toward the fourth interface part 21a4 under the control of the second coolant valve 2222, and leaves the coolant distribution assembly 2 through the fourth interface part 21a4 to flow toward the radiator 97.

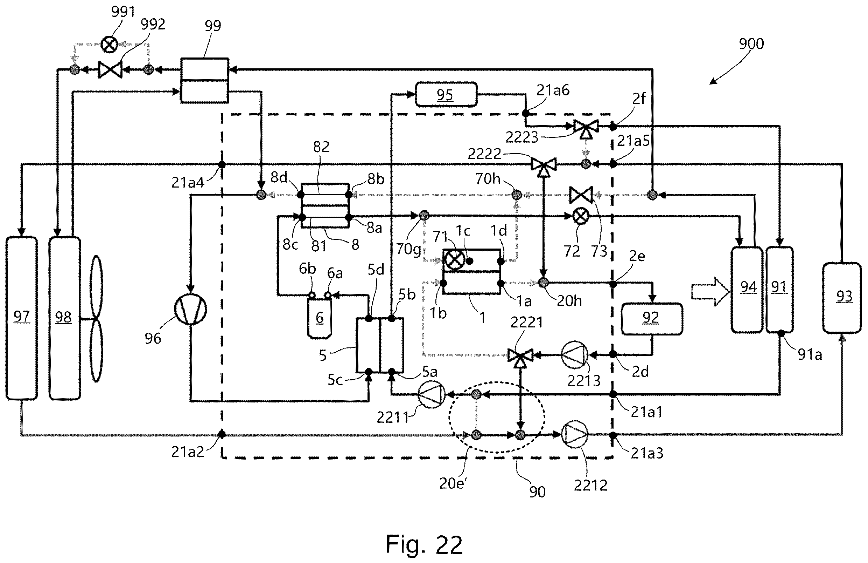

In a fourth operating mode of the vehicle thermal management system 900 shown in Fig. 22, in contrast to the first operating mode, the external electronic expansion valve 991 is in a closed state, and the external stop valve 992 is in an open state. The stop valve 73 of the refrigerant valve assembly 7 is in a closed state, so refrigerant flowing out of the evaporator 94 will not enter the valve body 70, and instead flows toward the external intermediate heat exchanger 99, and after passing through the external intermediate heat exchanger 99, flows toward the external heat exchanger 98 via the external stop valve 992. Refrigerant leaving the external heat exchanger 98 passes through the external intermediate heat exchanger 99 and then flows toward a gas intake port of the compressor 96. In this operating mode, the external heat exchanger 98 acts as an evaporator, absorbing heat from an external airflow. Higher-temperature coolant leaving the coolant heating device 95 enters the coolant distribution assembly 2 through the sixth interface part 21a6, and flows toward the heater core 91 under the control of the third coolant valve 2223, so that the heater core 91 can heat the airflow cooled by the evaporator 94. The coolant leaving the electric motor 93 no longer merges with the coolant leaving the coolant heating device 95, and instead flows toward the fourth interface part 21a4 under the control of the second coolant valve 2222, and leaves the coolant distribution assembly 2 through the fourth interface part 21a4 to flow toward the radiator 97. The first coolant valve 2221 and the second coolant valve 2222 are configured so that there is no coolant flow in the first heat exchanger 1, but there is coolant passing through the battery 92 and the third coolant pump 2213. Thus, the battery 92 will undergo heat exchange with coolant, and the battery 92 will be cooled.

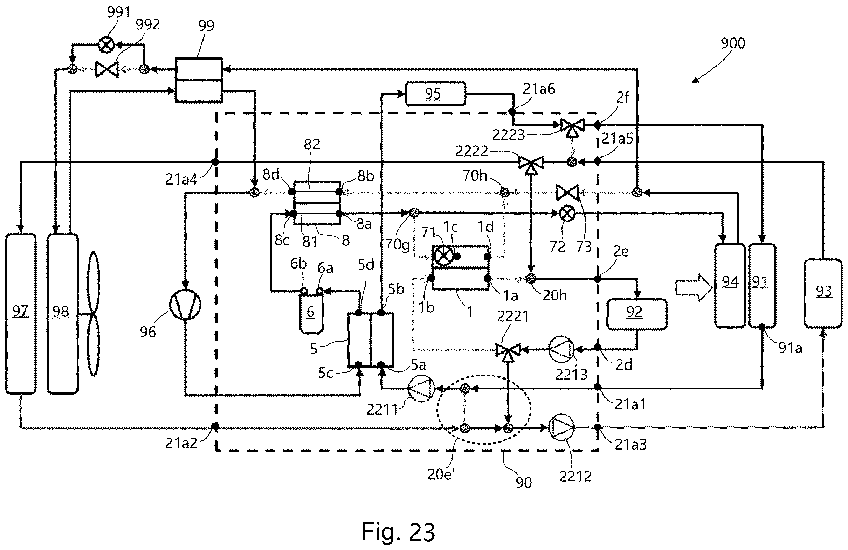

In a fifth operating mode of the vehicle thermal management system 900 shown in Fig. 23, in contrast to the fourth operating mode, the external electronic expansion valve 991 is in an open state, and the external stop valve 992 is in a closed state. In this mode, the external electronic expansion valve 991 throttles refrigerant entering the external heat exchanger 98, so as to obtain a lower evaporation temperature than in the fourth operating mode. The external heat exchanger 98 acts as an evaporator in this mode.

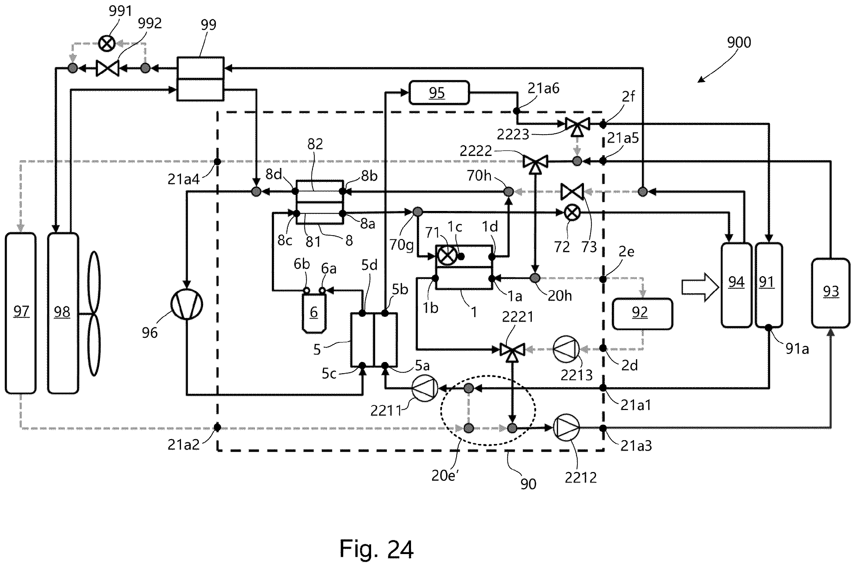

In a sixth operating mode of the vehicle thermal management system 900 shown in Fig. 24, in contrast to the fourth operating mode, the second coolant valve 2222 is configured so that there is no coolant flow in the radiator 97. Coolant leaving the electric motor 93 has already been heated by the electric motor 93, and this heated coolant enters the coolant distribution assembly 2 through the fifth interface part 21a5, and flows toward the merging cavity 20h under the guidance of the second coolant valve 2222, then leaves the coolant distribution assembly 2 through the first distribution port 2a, then enters the first heat exchanger 1 through the first coolant opening 1a; the second coolant valve 2221 is configured to guide coolant leaving the first heat exchanger 1 through the second coolant opening 1b to enter the upstream channel cavity 20e', and there is no coolant flow in the battery 92 and the third coolant pump 2213. The first expansion valve 71 is open; consequently, within the first heat exchanger 1, there is flow of refrigerant from the first intermediate cavity 70g. The refrigerant in the first heat exchanger 1 evaporates, so as to absorb heat from the coolant in the first heat exchanger 1. Refrigerant leaving the first heat exchanger 1 passes through the second intermediate cavity 70h and flows toward the intermediate heat exchanger 8. Refrigerant leaving the intermediate heat exchanger 8 and refrigerant leaving the external intermediate heat exchanger 99 merge and then flow toward the gas intake port of the compressor 96.

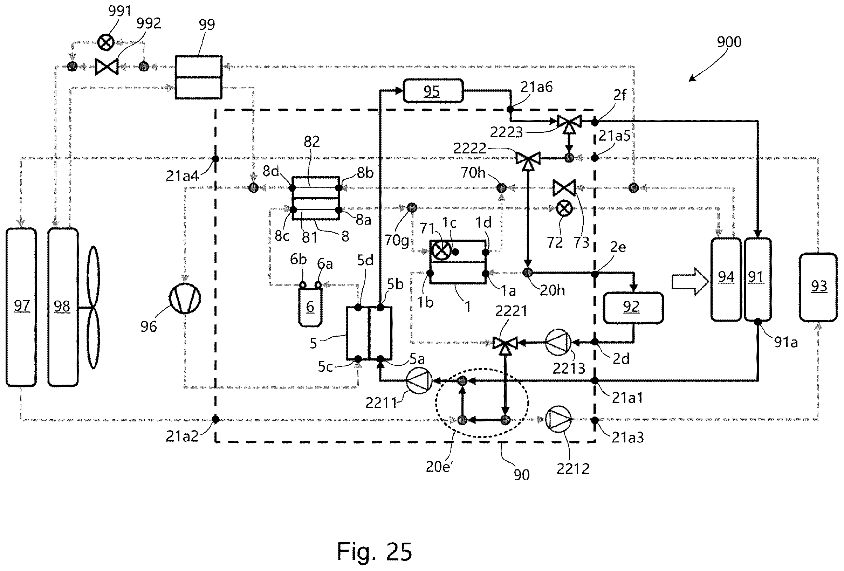

In a seventh operating mode of the vehicle thermal management system 900 shown in Fig. 25, there is no refrigerant flow in the refrigerant circuit. In the coolant circuit, the coolant heating device 95 heats coolant leaving the second heat exchanger 5 through the fourth coolant opening 5b, and the heated coolant splits into two streams under the guidance of the third coolant valve 2223; one stream passes through the battery 92 to heat the battery, and the other stream passes through the heater core 91, to heat an airflow passing through the heater core 91. Coolant leaving the battery 92 and coolant leaving the heater core 91 enter the upstream channel cavity 20e' separately, and flow toward the third coolant opening 5a of the second heat exchanger 5 under the suction of the first coolant pump 2211.

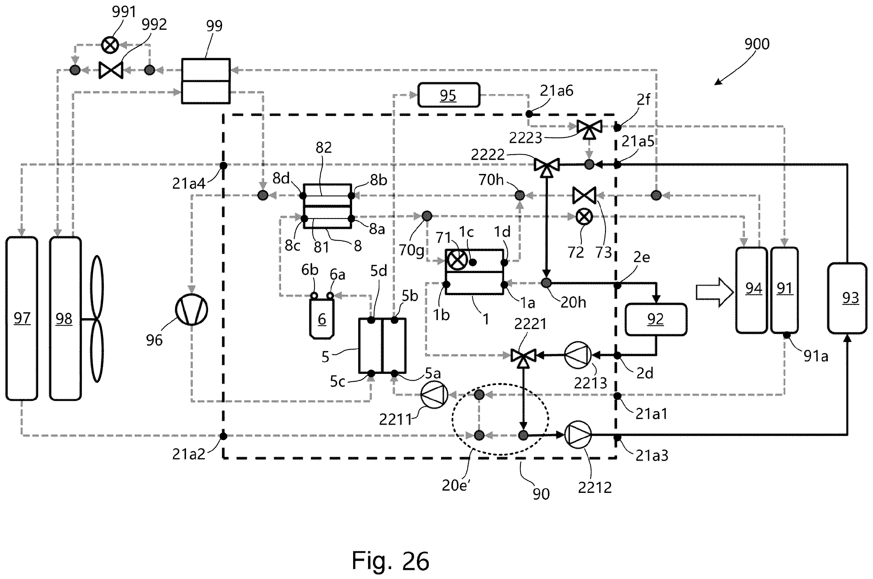

In an eighth operating mode of the vehicle thermal management system 900 shown in Fig. 26, there is no refrigerant flow in the refrigerant circuit, and there is no coolant flow in the coolant heating device 95 and the second heat exchanger 5. Coolant leaving the electric motor 93 passes through the battery 92, such that heat generated during operation of the electric motor 93 can be transferred to the battery 92, so that the battery 92 can heat up as the electric motor 93 is cooled.

Although the present invention has been disclosed above through preferred embodiments, these are not intended to limit it. Any person skilled in the art can make possible changes and amendments without departing from the spirit and scope of the present invention. Any amendments, equivalent changes and modifications made to the above embodiments based on the technical substance of the present invention without departing from the content of the technical solution of the present invention shall fall within the scope of protection defined by the claims of the present invention.

## Claims

1. A coolant distribution assembly, comprising a distribution plate main body (20), a cover (21) and a coolant distribution unit (22); the distribution plate main body (20) has a mounting cavity (20d), a channel cavity (20e) and a through-hole (20f); the through-hole (20f) establishes communication between the mounting cavity (20d) and the channel cavity (20e);
the mounting cavity (20d) has a mounting opening (205), and the channel cavity (20e) has a channel opening (206); the mounting opening (205) and the channel opening (206) respectively face two sides in a thickness direction (T) of the distribution plate main body (20);
the coolant distribution unit (22) is mounted in the mounting cavity (20d) via the mounting opening (205), and the cover (21) covers the channel opening (206).

2. The coolant distribution assembly as claimed in claim 1, **characterized in that** the cover (21) has an interface part (21a), the interface part (21a) being in communication with the channel cavity (20e).

3. The coolant distribution assembly as claimed in claim 1, **characterized in that** the mounting cavity (20d) has a first bottom wall (201) and a first side wall (202); in the thickness direction (T) of the distribution plate main body (20), one end of the first side wall (202) is connected to the first bottom wall (201), and another end of the first side wall (202) defines the mounting opening (205);
the channel cavity (20e) has a second bottom wall (203) and a second side wall (204); in the thickness direction (T) of the distribution plate main body (20), one end of the second side wall (204) is connected to the second bottom wall (203), and another end of the second side wall (204) defines the channel opening (206);
in the mounting cavity (20d), an edge of the through-hole (20f) is formed on the first side wall (202) and/or the first bottom wall (201); in the channel cavity (20e), an edge of the through-hole (20f) is formed on the second side wall (204) and/or the second bottom wall (203).

4. The coolant distribution assembly as claimed in claim 3, **characterized in that** the mounting cavity (20d) has a first depth (D1) defined by the mounting opening (205) and the first bottom wall (201) in the thickness direction (T); the channel cavity (20e) has a second depth (D2) defined by the mounting opening (206) and the second bottom wall (203) in the thickness direction (T);
the first depth (D1) and the second depth (D2) at least partially coincide in the thickness direction (T), so as to define a coincidence zone (D3); and at least a portion of the edge of the through-hole (20f) is located in the coincidence zone (20g).

5. The coolant distribution assembly as claimed in claim 3, **characterized in that** the edge of the through-hole (20f) comprises a first edge (2031) and a second edge (2041) located in the channel cavity (20e); the first edge (2031) is formed on the second bottom wall (203), and the second edge (2041) is formed on the second side wall (204).

6. The coolant distribution assembly as claimed in claim 3, **characterized in that** the edge of the through-hole (20f) comprises a third edge (2011) and a fourth edge (2021) located in the mounting cavity (20d); the third edge (2011) is formed on the first bottom wall (201), and the fourth edge (2021) is formed on the first side wall (202).

7. The coolant distribution assembly as claimed in claim 3, **characterized in that** the coolant distribution unit (22) comprises a coolant pump (221), and the mounting cavity (20d) comprises a pump mounting cavity (20d');
the coolant pump (221) is mounted in the pump mounting cavity (20d'), and the coolant pump (221) is configured to cause coolant to be sucked into and discharged from the pump mounting cavity (20d').

8. The coolant distribution assembly as claimed in claim 7, **characterized in that** the through-hole (20f) comprises an upstream through-hole (20f') and a downstream through-hole (20f"), and the channel cavity (20e) comprises an upstream channel cavity (20e') and a downstream channel cavity (20e"); the pump mounting cavity (20d') is in communication with the upstream channel cavity (20e') via the upstream through-hole (20f'), and the pump mounting cavity (20d') is in communication with the downstream channel cavity (20e") via the downstream through-hole (20f");
the pump mounting cavity (20d') is configured to suck in coolant from the upstream channel cavity (20e') through the upstream through-hole (20f'), and discharge coolant to the downstream channel cavity (20e") through the downstream through-hole (20f").

9. The coolant distribution assembly as claimed in claim 8, **characterized in that** the first bottom wall (201) of the pump mounting cavity (20d') is sunk to form a vortex flow path (201a), wherein the vortex flow path (201a) gradually widens in a direction toward the downstream through-hole (20f").

10. The coolant distribution assembly as claimed in claim 8, **characterized in that** the pump mounting cavity (20d') comprises a first pump mounting cavity (20d'1) and a second pump mounting cavity (20d'2); the coolant pump (221) comprises a first coolant pump (2211) mounted in the first pump mounting cavity (20d'1) and a second coolant pump (2212) mounted in the second pump mounting cavity (20d'2); the upstream through-hole (20f') comprises a first upstream through-hole (20f'1) and a second upstream through-hole (20f'2); the downstream through-hole (20f") comprises a first downstream through-hole (20f"1) and a second downstream through-hole (20f"2); the downstream channel cavity (20e") comprises a first downstream channel cavity (20e"1) and a second downstream channel cavity (20e"2);
the first pump mounting cavity (20d'1) is configured to suck in coolant from the upstream channel cavity (20e') through the first upstream through-hole (20f'1), and discharge coolant to the first downstream channel cavity (20e"1) through the first downstream through-hole (20f"1); the second pump mounting cavity (20d'2) is configured to suck in coolant from the upstream channel cavity (20e') through the second upstream through-hole (20f'2), and discharge coolant to the second downstream channel cavity (20e"2) through the second downstream through-hole (20f"2).

11. The coolant distribution assembly as claimed in claim 10, **characterized in that** the interface part (21a) of the cover (21) comprises a first interface part (21a1) and a second interface part (21a2); the first interface part (21a1) and the second interface part (21a2) are separately in communication with the upstream channel cavity (20e'), wherein the first interface part (21a1) and the first upstream through-hole (20f'1) are arranged in such a way as to have a common center line, and the second interface part (21a2) and the second upstream through-hole (20f'2) are arranged in such a way as to have a common center line.

12. The coolant distribution assembly as claimed in claim 10, **characterized in that** the coolant distribution unit (22) further comprises a coolant valve (222), and the mounting cavity (20d) further comprises a valve mounting cavity (20d"), the coolant valve (222) being mounted in the valve mounting cavity (20d"),
wherein the coolant valve (222) comprises a first coolant valve (2221), and the valve mounting cavity (20d") comprises a first valve mounting cavity (20d"1), the first coolant valve (2221) being mounted in the first valve mounting cavity (20d"1);
the through-hole (20f) comprises a first intermediate through-hole (20f-1), and the upstream channel cavity (20e') is in communication with the first valve mounting cavity (20d"1) via the first intermediate through-hole (20f-1);
the first intermediate through-hole (20f-1), the first upstream through-hole (20f'1) and the second upstream through-hole (20f'2) are distributed in an extension direction of the upstream channel cavity (20e'), wherein the second upstream through-hole (20f'2) is located between the first intermediate through-hole (20f-1) and the first upstream through-hole (20f'1).

13. A thermal management module, **characterized in that** it comprises a first heat exchanger (1), a second heat exchanger (5) and a coolant distribution assembly (2);
the first heat exchanger (1) has a first coolant opening (1a) and a second coolant opening (1b);
the second heat exchanger (5) has a third coolant opening (5a) and a fourth coolant opening (5b);
the coolant distribution assembly (2) has a first distribution port (2a), a second distribution port (2b), a third distribution port (2c), a first intermediate through-hole (20f-1), an upstream channel cavity (20e') and a first downstream channel cavity (20e"1);
the first coolant opening (1a) is in communication with the first distribution port (2a); the second coolant opening (1b) is in communication with the second distribution port (2b), and is in communication with the upstream channel cavity (20e') via the second distribution port (2b) and the first intermediate through-hole (20f-1);
the third coolant opening (5a) is in communication with the third distribution port (2c),and is in communication with the first downstream channel cavity (20e"1) via the third distribution port (2c).

14. A vehicle thermal management system, comprising a heater core (91) and a thermal management module (90); the thermal management module (90) comprises a coolant distribution assembly (2); an outlet (91a) of the heater core (91) is in communication with a first interface part (21a1) of the coolant distribution assembly (2), and is in communication with an upstream channel cavity (20e') of the coolant distribution assembly (2) via the first interface part (21a1).
